# EUROPEAN PATENT SPECIFICATION

(11) **EP 3 618 971 B1**
(45) Date of publication and mention of the grant of the patent: **18.01.2023**
(21) Application number: 18723914.0
(22) Date of filing: 01.05.2018
(51) Int. Cl.: B05B 12/24, C09J 7/21

(54) **MASKING TAPE**
ABDECKBAND
RUBAN DE MASQUAGE

(30) Priority: 03.05.2017 GB 201706995
(43) Date of publication of application: 11.03.2020
(73) Proprietor: Dudding, Jonathon Daniel, Anlaby, Hull Yorkshire HU10 7DL (GB)
(72) Inventor: Dudding, Jonathon Daniel, Anlaby, Hull Yorkshire HU10 7DL (GB)
(74) Representative: Sewell, Adrian David
(86) International application number: PCT/GB2018/051162
(87) International publication number: WO 2018/203046

(56) References cited:
- EP-A2- 0 188 375
- EP-A2- 0 831 137
- WO-A2-00/77111
- DE-A1- 19 838 934
- DE-A1-102012 004 552
- GB-A- 2 079 628
- US-A- 4 033 803
- US-A1- 2011 281 079
- US-A1- 2012 231 167

## Description

The present invention relates to masking tape for painting applications. In particular, but not exclusively, the present invention relates to a dual-purpose masking tape for protecting a surface from the application of a decorative finish such as paint.

Conventional masking tape consists of a relatively thin and easy to tear paper having a relatively low tack, pressure-sensitive adhesive located entirely over one side of the paper. It is available in a variety of widths and is used mainly in painting to mask off surfaces, such as a portion of a wall or ceiling adjacent to a door/window frame, skirting board, built-in wardrobe, or the like, that is to be painted to thereby prevent the portion of wall or ceiling from being painted. The low tack adhesive allows the masking tape to be supplied in a roll and to be easily applied to and removed from a surface without leaving residue or damaging the surface to which it has been applied. Masking tape is generally available in several strengths, rated on a scale based on the strength of the adhesive or for how long the tape can be left without leaving a residue on the surface it is protecting.

Whilst it is common practice to use conventional masking tape to protect a wall/ceiling surface which abuts up to the area to be painted, sheeting is typically used to protect the larger remaining area of the wall/ceiling, particularly in spraying applications when paint spray can drift further afield from the area being painted. Such sheeting must be secured to the wall/ceiling in a further 'preparation' step by using further masking or duct tape which undesirably wastes material and is costly. Furthermore, when painting has been completed and the paint has sufficiently dried, the sheeting must first be removed, usually by accessing relatively high locations by ladder and/or scaffold, followed by removing the masking tape applied around the areas which have been painted. These 'post-painting' steps are time consuming and therefore costly, and typically require climbing up and down ladders/scaffold numerous times which is inconvenient and introduces additional risk of accidents and injuries during the decorating process.

Prior art adhesive tapes are described in EP0188375, US2012/231167, DE102012004552, GB2079628, US4033803, WO00/77111, DE19838934, US2011/281079 and EP0831137.

It is an aim of certain embodiments of the present invention to provide a dual-purpose masking tape which reduces material usage and cost, labour time, and also the risk of accidents during a decorating operation.

It is an aim of certain embodiments of the present invention to provide a dual-purpose masking tape that is securable to a portion of a surface not to be painted and which is adapted to securely locate a sheet over a remaining portion of the surface not to be painted, whilst being easily removable from the surface in a single step.

According to a first aspect of the present invention there is provided a tape for masking a surface to be painted, comprising:
an elongate and unitary substrate having a first surface and an opposed second surface;
a first adhesive portion disposed on and extending partially across the first surface from a first edge region of the substrate, wherein the first adhesive portion comprises a continuous layer of adhesive extending along the first edge region of the substrate; and
a second adhesive portion disposed on the second surface and substantially not opposed to the first adhesive portion such that the first and second adhesive portions do not overlap,
characterised in that the first adhesive portion is disposed on around 60-80% of a width of the substrate and the second adhesive portion is disposed on around 20-40% of the width of the substrate, and wherein an adhesive strength of the first adhesive portion is substantially less than an adhesive strength of the second adhesive portion.

Optionally, the second adhesive portion comprises a continuous layer of adhesive extending along a second edge region of the substrate which is opposed to the first edge region.

Optionally, the second adhesive portion comprises a plurality of spaced apart adhesive portions.

Optionally, the substrate comprises paper.

Optionally, the first and/or second adhesive portions comprise a rubber-based adhesive.

Optionally, the tape further comprises a release layer located on the second adhesive portion.

According to a second aspect of the present invention there is provided a method of manufacturing a tape for masking a surface to be painted, comprising:
providing an elongate and unitary substrate having a first surface and an opposed second surface;
disposing a first adhesive portion on the first surface to partially extend from a first edge region of the substrate, wherein the first adhesive portion comprises a continuous layer of adhesive extending along the first edge region of the substrate; and
disposing a second adhesive portion on the second surface and substantially not opposed to the first adhesive portion such that the first and second adhesive portions do not overlap,
characterised in that the first adhesive portion is disposed on around 60-80% of a width of the substrate and the second adhesive portion is disposed on around 20-40% of the width of the substrate, and wherein an adhesive strength of the first adhesive portion is substantially less than an adhesive strength of the second adhesive portion.

Optionally, the second adhesive portion comprises a continuous layer of adhesive extending along a second edge region of the substrate which is opposed to the first edge region.

Optionally, the method further comprises locating a release layer on the second adhesive portion.

### Description of the Drawings

Certain embodiments of the present invention will now be described with reference to the accompanying drawings in which:
Figure 1 illustrates a sectional view of a masking tape according to certain embodiments of the present invention; and
Figure 2 illustrates a roll of a masking tape according to certain embodiments of the present invention.

### Detailed Description

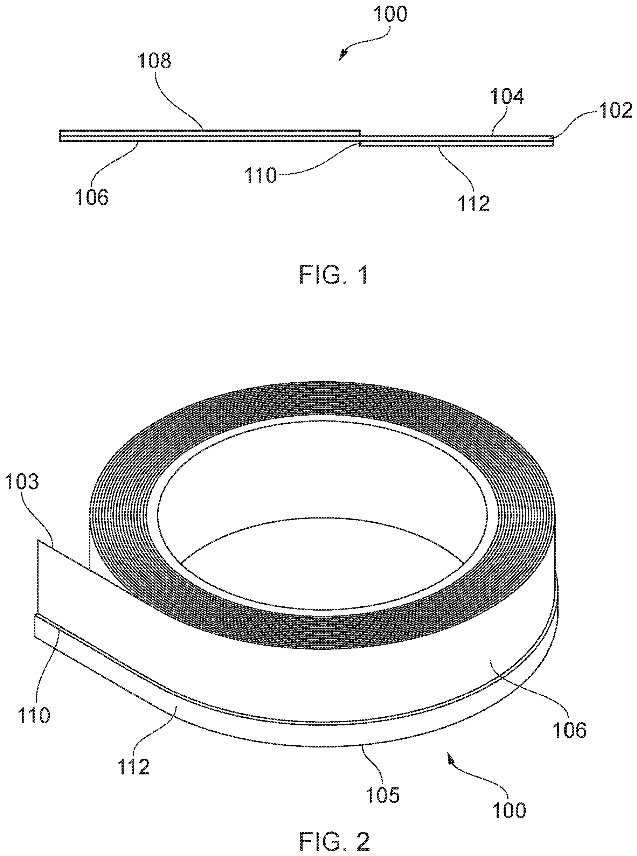

As illustrated in Figure 1, a masking tape 100 according to certain embodiments of the present invention includes a substrate 102 having a first surface 104 and an opposed second surface 106. The substrate 102 is paper, such as crepe paper, but may be, or comprise, a different material to suit a particular application for the masking tape, such as polyester, polyimide, glass cloth, foil, vinyl, or the like.

The marking tape 100 further includes a first layer of adhesive 108 disposed on the first surface 104 for releasably securing the masking tape 100 to a surface, such as a wall or ceiling, to be protected from painting or the like. The first layer of adhesive 108 is aptly a rubber-based, pressure sensitive adhesive but may be acrylic-based or silicon-based, or the like, depending on its application. Aptly, the first layer of adhesive 108 on the first surface 104 of the masking tape substrate 102 is a relatively low-tack adhesive which allows for relatively easy, low force release/peel from the surface being protected, e.g. the first adhesive has an adhesive strength of around 10-35N/100mm and aptly around 25-30N/100mm. The first layer of adhesive 108 extends from a first edge region 103 of the substrate but does not extend entirely across the first surface in the lateral direction to a second end region 105 of the substrate. Instead, the first layer of adhesive 108 extends around 50-95% across the width of the substrate 102 from the first edge region 103, and preferably around 60-80% across the width of the substrate 102. Such an arrangement provides a first portion of the first surface 104 including the first edge region 103 with adhesive applied thereto and a remaining portion of the first surface 104 (which is laterally adjacent to the first portion) including the second edge region 105 without adhesive applied thereto. In use, the first edge region 103 of the substrate is located proximal the surface to be painted such that 'bleeding' of paint under the masking tape and onto the surface being protected is preferably prevented.

The masking tape 100 further includes a second layer of adhesive 110 disposed on the second surface 106 for securely attaching a protective sheet, such as a plastic or paper sheet, to the masking tape 100 to protect more of the surface, such as a wall or ceiling, and/or furniture from painting or the like. The second layer of adhesive 110 is aptly a rubber-based, pressure sensitive adhesive but may be acrylic-based or silicon-based, or the like, depending on its application. Aptly, the second layer of adhesive 110 on the second surface 106 of the masking tape substrate 102 is a relatively high-tack adhesive to securely attach the protective sheet to the second surface of the masking tape substrate 102, e.g. the second adhesive has an adhesive strength of greater than around 35N/100mm, aptly around 70-150N/100mm. The second layer of adhesive 110 extends from the second edge region 105 of the substrate but does not extend entirely across the second surface in the lateral direction towards the first edge region 103. The second layer of adhesive 110 extends around 5-50% across the width of the substrate 102 from the second edge region 105, and preferably around 20-40% across the width of the substrate 102. Such an arrangement provides a first portion of the second surface 106 including the second edge region 105 with adhesive applied thereto and a further portion of the second surface 106 (which is laterally adjacent to the first portion) including the first edge region 103 without adhesive applied thereto. In this manner, the first layer of adhesive 108 on the first surface 104 of the substrate 102 substantially opposes and aligns with the non-adhesive portion of the second surface 106. Likewise, the second layer of adhesive 110 on the second surface 106 of the substrate 102 substantially opposes and aligns with the non-adhesive portion of the first surface 104. Aptly, the surface area ratio between the first adhesive and the second adhesive is around 3:2 and preferably around 4:1. Such ratios of adhesive ensure the low tack first adhesive layer 108 is sufficient to securely fix the tape to the surface being masked even when a relatively heavy protective sheeting is being hung from the tape in use by the relatively smaller amount of high tack adhesive on the second, outwardly facing, surface 106 of the substrate 102. Aptly, the second layer of adhesive 110 is at least a 10mm wide continuous layer of adhesive extending along the second edge region 105 of the substrate 102. Such an arrangement encourages a user to fix a protective sheeting to the front side of the tape without the sheet extending beyond the first edge region 103 of the tape 100 which could undesirably mask additional areas of the surface to be painted. A continuous layer of second adhesive 110 on the front surface 106 of the substrate 102 also desirably prevents any paint from running between the tape and the sheet.

Furthermore, a release layer 112 is provided on the second layer of adhesive 110 to allow the masking tape 100 to be rolled as shown in Figure 2, and also to allow the masking tape to be handled when applying the same to a surface to be protected from painting. When the masking tape 100 is in place on the surface to be protected from painting, the release layer 112 can be removed, if desired, to reveal the relatively high tack second layer of adhesive 110 to which protective sheeting can be efficiently secured to extend over a relatively large area of wall or ceiling to be protected, e.g. between window frames and/or between a dado rail and picture rail/cornicing to be painted.

After painting has been completed, the relatively high tack of the second adhesive layer 100 ensures the sheeting remains attached to the masking tape 100, whilst the relatively low tack of the first layer of adhesive 108 allows the masking tape 100 to be easily removed by pulling on the protective sheeting without having to climb up ladders/scaffolding. Furthermore, the non-adhesive portion of the first surface 104 allows a portion (preferably a minor portion) of the masking tape 100 to lift away from the surface being protected and thereby to create an angled tab for a pull force via the protective sheeting to act on and efficiently start peeling the relatively low tack first adhesive layer 108 from the surface being protected with little if not no risk of tearing. In view of the inboard edge of the first layer of adhesive being substantially aligned with the inboard edge of the second layer of adhesive, whilst there being no overlap between the two adhesive layers, a hinge line is efficiently created in use along the substrate when the angled pull force is applied to the tape via the protective sheeting securely attached thereto which further provides for efficient load transfer through the tape and release of the same from the surface being protected.

Aptly, the adhesive layers 108,110 are both continuous in the longitudinal direction of the tape 100 and extend partially across the respective surface of the substrate 102 from the opposed edge regions 103,105 thereof. However, whilst it is desirable for the first portion of adhesive 108 to be a continuous layer along the first edge region 103 of the substrate 102 to prevent any 'bleeding' of paint under the masking tape at that edge, the second portion of adhesive 110 may alternatively comprise intermittent and spaced apart adhesive portions for securely holding a protective sheet to the masking tape 100. The spaced apart adhesive portions may or may not extend from the second edge region of the substrate and may extend over a minor or major part of the second surface 106. They may be any suitable size, shape and/or pattern depending on, for example, the material/weight of protective sheeting to be attached to the masking tape in use. Furthermore, the adhesive of the first and second portions 108,110 may be the same or different depending on the application for the tape. For example, the adhesive on both surfaces of the substrate may have the same tackiness/adhesive strength or aptly the adhesive on the second surface for attaching a protective sheet has a tackiness/adhesive strength which is greater than the adhesive disposed on the first surface.

The masking tape 100 according to certain embodiments of the present invention may be any suitable size and/or material/s depending on its desired application. For example, the masking tape 100 illustrated in Figure 1 has a total width of around 25mm, wherein the first layer of adhesive 108 extends across the first surface 104 of the substrate 102 from one edge of the substrate 102 by around 15mm, and the wherein the second layer of adhesive 110 extends across the second surface 106 of the substrate 102 from the other edge of the substrate 102 by around 10mm. The masking tape according to another embodiment of the present invention has a total width of around 50mm, wherein the first layer of adhesive extends across the first surface of the substrate from one edge of the substrate by around 40mm, and the wherein the second layer of adhesive extends across the second surface of the substrate from the other edge of the substrate by around 10mm. The substrate is desirably easy-tear crepe paper of around 0.1-0.2mm and may be any suitable width ranging from around 10-1500mm for example. The release layer 112 may be any suitable thickness, such as around 0.08mm, and comprise any suitable material/s, such as paper or plastic film having a suitable release agent, such as a silicon-based release agent, disposed on one side thereof.

A roll of masking tape according to certain embodiments of the present invention is illustrated in Figure 2 and has a diameter of around 100mm but may be any suitable size according to its application. The tape may be any suitable length, such as around 50m, and may be coloured and/or patterned as desired.

Certain embodiments of the present invention therefore provide a dual-purpose masking tape which reduces material usage and cost, labour time, and also the risk of injury or accidents during a decorating operation. The masking tape is securable to a portion of a surface not to be painted and which is adapted to securely locate a protective sheet over a remaining portion of the surface not to be painted, whilst being easily removable from the surface in a single step by a single person in a safe and efficient manner.

## Claims

1. A tape (100) for masking a surface to be painted, comprising:
an elongate and unitary substrate (102) having a first surface (104) and an opposed second surface (106);
a first adhesive portion (108) disposed on and extending partially across the first surface from a first edge region (103) of the substrate, wherein the first adhesive portion (108) comprises a continuous layer of adhesive extending along the first edge region of the substrate; and
a second adhesive portion (110) disposed on the second surface (106) and substantially not opposed to the first adhesive portion (108) such that the first and second adhesive portions do not overlap,
**characterised in that** the first adhesive portion (108) is disposed on around 60-80% of a width of the substrate and the second adhesive portion (110) is disposed on around 20-40% of the width of the substrate, and wherein an adhesive strength of the first adhesive portion (108) is substantially less than an adhesive strength of the second adhesive portion (110).

2. The tape as claimed in claim 1, wherein the second adhesive portion (110) comprises a continuous layer of adhesive extending along a second edge region (105) of the substrate which is opposed to the first edge region (103).

3. The tape as claimed in any preceding claim, wherein the second adhesive portion (110) comprises a plurality of spaced apart adhesive portions.

4. The tape as claimed in any preceding claim, wherein the substrate (102) comprises paper.

5. The tape as claimed in any preceding claim, wherein the first and/or second adhesive portions (108,110) comprise a rubber-based adhesive.

6. The tape as claimed in any preceding claim, further comprising a release layer (112) located on the second adhesive portion (110).

7. A method of manufacturing a tape (100) for masking a surface to be painted, comprising:
providing an elongate and unitary substrate (102) having a first surface (104) and an opposed second surface (106);
disposing a first adhesive portion (108) on the first surface to partially extend from a first edge region (103) of the substrate, wherein the first adhesive portion (108) comprises a continuous layer of adhesive extending along the first edge region of the substrate; and
disposing a second adhesive portion (110) on the second surface (106) and substantially not opposed to the first adhesive portion (108) such that the first and second adhesive portions do not overlap,
**characterised in that** the first adhesive portion (108) is disposed on around 60-80% of a width of the substrate and the second adhesive portion (110) is disposed on around 20-40% of the width of the substrate, and wherein an adhesive strength of the first adhesive portion (108) is substantially less than an adhesive strength of the second adhesive portion (110).

8. The method as claimed in claim 7, wherein the second adhesive portion (110) comprises a continuous layer of adhesive extending along a second edge region (105) of the substrate which is opposed to the first edge region (103).

9. The method as claimed in claim 7 or 8, further comprising locating a release layer (112) on the second adhesive portion (110).

## Patentansprüche

1. Band (100) zum Abdecken einer zu lackierenden Oberfläche, das Folgendes umfasst:
ein längliches und einheitliches Substrat (102) mit einer ersten Oberfläche (104) und einer gegenüberliegenden zweiten Oberfläche (106);
einen ersten Klebeabschnitt (108), der auf der ersten Oberfläche angeordnet ist und sich von einem ersten Randbereich (103) des Substrats teilweise über die erste Oberfläche erstreckt, wobei der erste Klebeabschnitt (108) eine kontinuierliche Klebstoffschicht umfasst, die sich entlang des ersten Randbereichs des Substrats erstreckt; und
einen zweiten Klebeabschnitt (110), der auf der zweiten Oberfläche (106) angeordnet ist und dem ersten Klebeabschnitt (108) im Wesentlichen nicht gegenüberliegt, so dass sich der erste und der zweite Klebeabschnitt nicht überlappen,
**dadurch gekennzeichnet, dass** der erste Klebeabschnitt (108) auf etwa 60-80% einer Breite des Substrats angeordnet ist und der zweite Klebeabschnitt (110) auf etwa 20-40% der Breite des Substrats angeordnet ist, und wobei eine Klebekraft des ersten Klebeabschnitts (108) wesentlich geringer ist als eine Klebekraft des zweiten Klebeabschnitts (110).

2. Band nach Anspruch 1, wobei der zweite Klebeabschnitt (110) eine kontinuierliche Klebstoffschicht umfasst, die sich entlang eines zweiten Randbereichs (105) des Substrats erstreckt, der dem ersten Randbereich (103) gegenüberliegt.

3. Band nach einem vorherigen Anspruch, wobei der zweite Klebeabschnitt (110) mehrere beabstandete Klebeabschnitte umfasst.

4. Band nach einem vorherigen Anspruch, wobei das Substrat (102) Papier umfasst.

5. Band nach einem vorherigen Anspruch, wobei der erste und/oder der zweite Klebeabschnitt (108, 110) einen Klebstoff auf Gummibasis umfasst.

6. Band nach einem vorherigen Anspruch, das ferner eine Trennschicht (112) umfasst, die sich auf dem zweiten Klebeabschnitt (110) befindet.

7. Verfahren zur Herstellung eines Bandes (100) zum Abdecken einer zu lackierenden Oberfläche, das Folgendes beinhaltet:
Bereitstellen eines länglichen und einheitlichen Substrats (102) mit einer ersten Oberfläche (104) und einer gegenüberliegenden zweiten Oberfläche (106);
Anordnen eines ersten Klebeabschnitts (108) auf der ersten Oberfläche, der sich teilweise von einem ersten Randbereich (103) des Substrats erstreckt, wobei der erste Klebeabschnitt (108) eine kontinuierliche Klebstoffschicht umfasst, die sich entlang des ersten Randbereichs des Substrats erstreckt; und
Anordnen eines zweiten Klebeabschnitts (110) auf der zweiten Oberfläche (106) und im Wesentlichen nicht gegenüber dem ersten Klebeabschnitt (108), so dass sich der erste und der zweite Klebeabschnitt nicht überlappen,
**dadurch gekennzeichnet, dass** der erste Klebeabschnitt (108) auf etwa 60-80% einer Breite des Substrats angeordnet ist und der zweite Klebeabschnitt (110) auf etwa 20-40% der Breite des Substrats angeordnet ist, und wobei eine Klebekraft des ersten Klebeabschnitts (108) wesentlich geringer ist als eine Klebekraft des zweiten Klebeabschnitts (110).

8. Verfahren nach Anspruch 7, wobei der zweite Klebeabschnitt (110) eine kontinuierliche Klebstoffschicht umfasst, die sich entlang eines zweiten Randbereichs (105) des Substrats erstreckt, der dem ersten Randbereich (103) gegenüberliegt.

9. Verfahren nach Anspruch 7 oder 8, das ferner das Positionieren einer Trennschicht (112) auf dem zweiten Klebeabschnitt (110) beinhaltet.

## Revendications

1. Ruban (100) de masquage d'une surface à peindre, comprenant :
un substrat (102) allongé et unitaire ayant une première surface (104) et une seconde surface (106) opposée ;
une première portion adhésive (108) disposée sur la première surface et s'étendant partiellement en travers de celle-ci à partir d'une première région de bord (103) du substrat, dans lequel la première portion adhésive (108) comprend une couche continue d'adhésif s'étendant le long de la première région de bord du substrat ; et
une seconde portion adhésive (110) disposée sur la seconde surface (106) et sensiblement non opposée à la première portion adhésive (108) de sorte que les première et seconde portions adhésives ne se chevauchent pas,
**caractérisé en ce que** la première portion adhésive (108) est disposée sur environ 60 à 80 % d'une largeur du substrat et la seconde portion adhésive (110) est disposée sur environ 20 à 40 % de la largeur du substrat, et dans lequel une force d'adhésion de la première portion adhésive (108) est sensiblement inférieure à une force d'adhésion de la seconde portion adhésive (110).

2. Ruban selon la revendication 1, dans lequel la seconde portion adhésive (110) comprend une couche continue d'adhésif s'étendant le long d'une seconde région de bord (105) du substrat qui est opposée à la première région de bord (103).

3. Ruban selon l'une quelconque des revendications précédentes, dans lequel la seconde portion adhésive (110) comprend une pluralité de portions adhésives espacées.

4. Ruban selon l'une quelconque des revendications précédentes, dans lequel le substrat (102) comprend du papier.

5. Ruban selon l'une quelconque des revendications précédentes, dans lequel les première et/ou seconde portions adhésives (108, 110) comprennent un adhésif à base de caoutchouc.

6. Ruban selon l'une quelconque des revendications précédentes, comprenant en outre une couche de séparation (112) située sur la seconde portion adhésive (110).

7. Procédé de fabrication d'un ruban (100) de masquage d'une surface à peindre, comprenant :
la fourniture d'un substrat (102) allongé et unitaire ayant une première surface (104) et une seconde surface (106) opposée ;
la disposition d'une première portion adhésive (108) sur la première surface pour qu'elle s'étende partiellement à partir d'une première région de bord (103) du substrat, dans lequel la première portion adhésive (108) comprend une couche continue d'adhésif s'étendant le long de la première région de bord du substrat ; et
la disposition d'une seconde portion adhésive (110) sur la seconde surface (106) et sensiblement non opposée à la première portion adhésive (108) de sorte que les première et seconde portions adhésives ne se chevauchent pas,
**caractérisé en ce que** la première portion adhésive (108) est disposée sur environ 60 à 80 % d'une largeur du substrat et la seconde portion adhésive (110) est disposée sur environ 20 à 40 % de la largeur du substrat, et dans lequel une force d'adhésion de la première portion adhésive (108) est sensiblement inférieure à une force d'adhésion de la seconde portion adhésive (110).

8. Procédé selon la revendication 7, dans lequel la seconde portion adhésive (110) comprend une couche continue d'adhésif s'étendant le long d'une seconde région de bord (105) du substrat qui est opposée à la première région de bord (103).

9. Procédé selon la revendication 7 ou 8, comprenant en outre le positionnement d'une couche de séparation (112) sur la seconde portion adhésive (110).
